# EUROPÄISCHE PATENTANMELDUNG

(11) **EP 0 557 788 A1**
(43) Veröffentlichungstag der Anmeldung: **01.09.1993**
(21) Anmeldenummer: 93102003.6
(22) Anmeldetag: 09.02.1993
(51) Int. Cl.: F16L 47/00

(54) **Rohrverbindungsstück aus Kunststoff für den Sanitär- und Heizungsbereich**

(30) Priorität: 27.02.1992 DE 9202575 U
(71) Anmelder: RAFELD KUNSTSTOFFTECHNIK GmbH & Co. KG, 87640 Ebenhofen (DE)
(72) Erfinder: Rafeld, Karl, W-8954 Biessenhofen-Ebenhofen (DE)
(74) Vertreter: Kern, Wolfgang, Dipl.-Ing.

(57) **Zusammenfassung**

1.1. Rohrverbindungs-T-Stück aus Kunststoff für den Sanitär- und Heizungsbereich mit zwei in bezug aufeinander fluchtend angeordneten, eine Durchflußbohrung bildenden Verbindungsmuffenstücken, in deren Bohrungen Kunststoffrohre einschweißbar sind, sowie einem zwischen den beiden Verbindungsmuffenstücken und mit ihnen ein einheitliches Ganzes bildenden Muffenkörper mit einer senkrecht zu den Bohrungen der Verbindungsstücke verlaufenden Bohrung zur Aufnahme eines dritten Kunststoffrohres.

1.2. Die Standfestigkeit und Lebensdauer solcher Rohrverbindungsstücke unter vergleichsweise hohen Innendrücken und -temperaturen ließ bisher zu wünschen übrig und soll verbessert werden.

2.1. Zu diesem Zweck wird vorgeschlagen, den Muffenkörper (6) mit einer die beiden Bohrungen (4, 5) der Verbindungsmuffenstücke (2, 3) verbindenden Bohrung (10) zu versehen, die bezogen auf die Mittellinie (19) der beiden Bohrungen (4, 5) eine in Richtung auf die der senkrecht verlaufenden Bohrung (7) gegenüberliegende Außenwand (18) des Rohrverbindungs-T-Stücks versetzte Mittellinie (20) aufweist und einen Durchmesser besitzt, der kleiner ist als der Durchmesser A1, A2 der Verbindungsmuffenstückbohrungen (4, 5) und die von der senkrecht verlaufenden Bohrung (7) durch deren Bodenwand (11) getrennt ist, welche eine Dicke C hat, die annähernd der Wanddicke D der Verbindungsmuffenstücke (2, 3) entspricht, sowie mit der senkrecht verlaufenden Bohrung (7) durch eine Bohrung (12) verbunden ist, deren Querschnitt um etwa die Wandstärke D der Verbindungsmuffenstücke (2, 3) kleiner ist als der Querschnitt der senkrecht verlaufenden Bohrung (7).

## Beschreibung

Die Erfindung betrifft ein Rohrverbindungs-T-Stück aus Kunststoff für den Sanitär- und Heizungsbereich mit zwei in bezug aufeinander fluchtend angeordneten, eine Durchflußbohrung bildenden Verbindungsmuffenstücken, in deren Bohrungen Kunststoffrohre einschweißbar sind, sowie einem zwischen den beiden Verbindungsmuffenstücken und mit ihnen ein einheitliches Ganzes bildenden Muffenkörper mit einer senkrecht zu den Bohrungen der Verbindungsmuffenstücke verlaufenden Bohrung zur Aufnahme eines dritten Kunststoffrohres.

Aus Kunststoff hergestellte Rohrverbindungsstücke dieser Art, auch Fittings genannt, bestehen gewöhnlich aus Polypropylen und müssen, sofern sie im Sanitär- und Heizungsbereich eingesetzt werden und damit auch heißes Wasser transportieren sollen, die Zulassungsbestimmungen des DVGW erfüllen, d.h. bei einer Temperatur von 95°C und einem Druck von 18 bar eine Standfestigkeit von 1000 Stunden aufweisen, wobei derartige Rohrverbinder allerdings nur für einen Druck von 8,5 bar und eine Temperatur von 70°C zugelassen sind.

Es hat sich nun gezeigt, daß die Standfestigkeit und Lebensdauer solcher Rohrverbindungsstücke aus Polypropylen unter Betriebsbedingungen, die den genannten zugelassenen Werten entsprechen, weit unter 1000 Stunden liegen. Bereits nach 100 Stunden bewirken die auftretenden Materialspannungen Verformungen, die sich zunächst in kreisbogenförmig verlaufenden Materialverfärbungen bemerkbar machen, wie sie schematisch in der Zeichnungsfigur 1 durch gestrichelte Linien dargestellt, so daß es dann relativ schnell zu Materialrissen und Brüchen an den verfärbten Stellen kommt.

Ähnliche Erscheinungen der Materialverformung und -ermüdund mit letztendlicher Rißbildung wurden auch bei winkelförmigen Rohrverbindungsstücken beobachtet und sind daher Gegenstand zahlreicher Versuche und grundlegender Überlegungen mit dem Ziel gewesen, diese Nachteile zu beseitigen und die Standfestigkeit bzw. Lebensdauer solcher Rohrstücke unter vergleichsweise hohen Innendrücken und -temperaturen zu erhöhen.

Diese Aufgabe wird erfindungsgemäß dadurch gelöst, daß der Muffenkörper mit einer die beiden Bohrungen der Verbindungsmuffenstücke verbindende Bohrung versehen ist, die, bezogen auf die Mittellinie der beiden Bohrungen, eine in Richtung auf die der senkrecht verlaufenden Bohrung gegenüberliegende Außenwand des Rohrverbindungs-T-Stücks versetzte Mittellinie aufweist und einen Durchmesser B besitzt, der kleiner ist als der Durchmesser A1, A2 der Verbindungsmuffenstückbohrungen und die von der senkrecht verlaufenden Bohrung durch deren Bodenwand getrennt ist, welche eine Dicke C hat, die annähernd der Wanddicke D1 der Verbindungsmuffenstücke entspricht sowie mit der senkrecht verlaufenden Bohrung durch eine Bohrung verbunden ist, deren Querschnitt um etwa die Wandstärke D1 der Verbindungsmuffenstücke kleiner ist als der Querschnitt der senkrecht verlaufenden Bohrung.

Kennzeichnend für diese konstruktive Ausbildung der Rohrverbindungsstücke ist nicht nur die Tatsache, daß sie die Prüfbedingungen voll erfüllen, d.h. der Verwendung von Polypropylen als Werkstoff unter einer Betriebstemperatur von 95°C und einem Betriebsdruck von 18 bar 1000 Stunden standhalten, ohne sich so stark zu verformen, daß sie reißen, sondern daß diese Bedingungen ohne wesentliche Gewichtsänderung des Verbindungsstücks und ohne konstruktive äußere Formänderung erreicht wird sowie ohne wesentliche Änderung der Durchflußmenge. Letzteres bedeutet keine Fertigungskostenerhöhung gegenüber dem bisherigen Zustand und auch keine Änderung der Anschlußbedingungen, da die bisher bereits verwendeten Kunststoffrohre ohne weiteres auch in die neuen Rohrverbindungsstücke eingeschweißt werden können.

Gemäß einer vorteilhaften Ausgestaltung des Erfindungsvorschlags weist die Verbindungsbohrung zwischen der senkrecht verlaufenden Bohrung und der Muffenkörperbohrung einen elliptischen Querschnitt auf, bei dem sich die grössere Hauptachse der Ellipse rechtwinklig zu den parallelen Längsachsen der Verbindungsmuffenstückbohrungen und der Muffenkörperbohrungen erstreckt. In diesem Zusammenhang kann der kleinste Durchmesser der Verbindungsbohrung, der im Falle eines elliptischen Querschnitts dieser Bohrung mit der Länge der kleinen Ellipsenhauptachse zusammenfällt und sich parallel zu den Bohrungslängsachsen erstreckt, etwa 2/3 des Durchmessers der Verbindungsmuffenstückbohrungen und des Durchmessers der zu diesen senkrecht verlaufenden Bohrung des Muffenkörpers sein.

Des weiteren hat sich bewährt, das Rohrverbindungsstück so auszubilden, daß der Durchmesser der exzentrisch zu den Verbindungsmuffenstückbohrungen angeordneten und diese verbindenden Muffenkörperbohrung einen Durchmesser aufweist, der etwa dem Innendurchmesser der in diesen Verbindungsmuffenstückbohrungen eingeschweißten Kunststoffrohren entspricht, so daß über einen wesentlichen Teil des Bohrungsumfangs der Muffenkörperbohrung ein glatter Übergang zwischen der Innenwand der Muffenkörperbohrung und der Innenwand der eingeschweißten Kunststoffrohre gegeben ist.

Es hat sich bewährt, die Verbindungsbohrung zwischen der senkrecht verlaufenden Bohrung und der Muffenkörperbohrung zentrisch zur Längsachse der senkrecht zu den Verbindungsmuffenstückbohrungen verlaufenden Bohrung anzuordnen und ferner den größten Durchmesser der Verbindungsbohrung in bezug auf den Durchmesser der Muffenkörperbohrung so zu wählen, daß die Verbindungsbohrung die Muffenkörperbohrung bis zur Mittellinie der Verbindungsmuffenstückbohrungen durchdringt.

Schließlich sollte die Exzentrizität der Muffenkörperbohrung in bezug auf die an sie angrenzenden beiden Verbindungsmuffenstückbohrungen zweckmäßigerweise etwa der Dicke der Verbindungsmuffenstückwandung entsprechen.

Gemäß einer weiteren Ausführungsform ist das Rohrverbindungsstück ein Winkelstück, das endseitig mit Verbindungsmuffenstücken zum Einschweißen von Kunststoffrohren versehen ist und sich dadurch kennzeichnet, daß der die beiden Verbindungsmuffenstücke verbindende Rohrbogen einen seiner Innenseite gegenüberliegenden, den Durchflußquerschnitt verengenden Wandvorsprung aufweist, der durch sich axial erstreckende, aufeinander senkrecht stehende Wandteile begrenzt wird und mit den Innenwandteilen der Verbindungsmuffenstücke eine Einheit bildet, wobei der Vorsprung zu den Verbindungsmuffenstücken hin von deren Boden begrenzt wird, bis zu dem die einzuschweißenden Kunststoffrohre einsteckbar sind.

Weitere vorteilhafte Ausgestaltungen der Erfindung sind den Unteransprüchen zu entnehmen.

Die Erfindung wird nachfolgend anhand der in der Zeichnung dargestellten Ausführungsbeispiele näher erläutert. In der Zeichnung zeigt:
- Fig. 1: eine Draufsicht eines bekannten Rohrverbindungs-T-Stücks mit drei eingeschweißten Kunststoffrohren zur Verdeutlichung des Materialspannungsverlaufes,
- Fig. 2: eine Längsschnittansicht des erfindungsgemäßen Rohrverbindungs-T-Stücks,
- Fig. 3: eine Querschnittsansicht des Rohrverbindungs-T-Stücks von Fig. 2,
- Fig. 4: eine Draufsicht des Rohrverbindungs-T-Stücks von Fig. 2,
- Fig. 5: eine Längsschnittansicht eines erfindungsgemäßen winkelförmigen Verbindungsstücks,
- Fig. 6: eine Draufsicht des Rohrverbindungsstücks von Fig. 5 und
- Fig. 7: eine Stirnansicht des Rohrverbindungsstücks von Fig. 5.

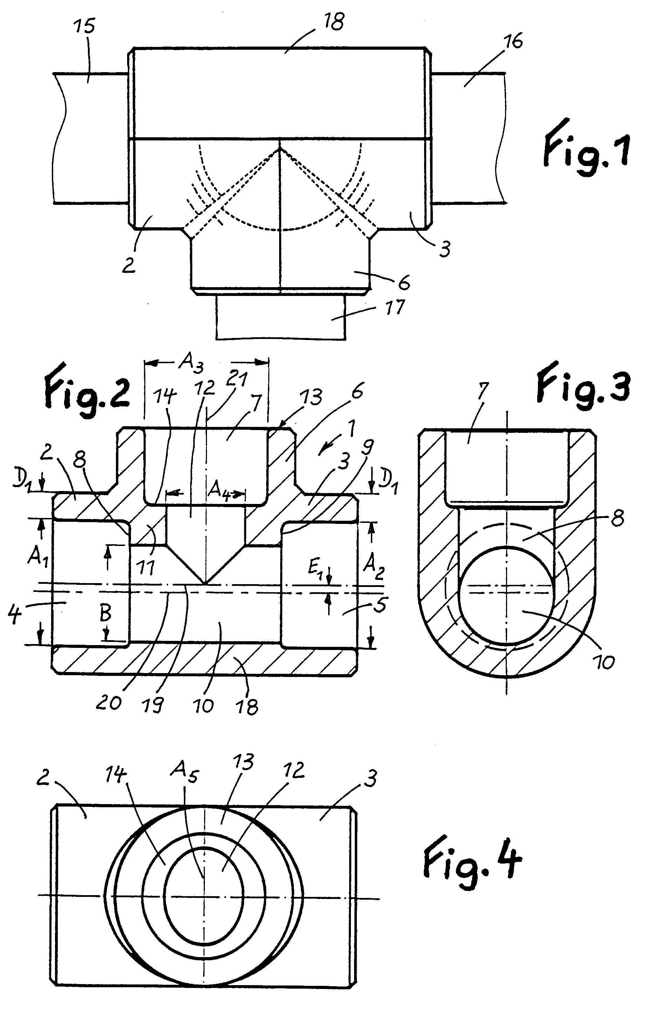

Das aus Polypropylen bestehende Rohrverbindungs-T-Stück 1 von Fig. 2 dient zur Verbindung dreier Kunststoffrohre, die in Fig. 1 mit 15, 16, und 17 bezeichnet sind, und weist zu diesem Zweck zwei in bezug aufeinander fluchtend angeordnete, eine Durchflußbohrung bildende Verbindunggmuffenstücke 2, 3 auf, in deren Bohrungen 4, 5 die Kunststoffrohre einschweißbar sind, sowie einen zwischen den beiden Verbindungsmuffenstücken und mit ihnen ein einheitliches Ganzes bildenden Muffenkörper 6 mit einer senkrecht zu den Bohrungen der Verbindungsmuffenstücke 2, 3 verlaufenden Bohrung 7 zur Aufnahme des dritten Kunststoffrohres, entsprechend dem Rohr 17 in Fig. 1.

Der Muffenkörper 6 ist mit einer die beiden Bohrungen 4, 5 verbindenden Bohrung 10 versehen, die, bezogen auf die Mittellinie 19 der beiden Bohrungen 4, 5, einen in Richtung auf die der senkrecht verlaufenden Bohrung 7 gegenüberliegende Außenwand 18 versetzte Mittellinie 20 aufweist, also um die Strecke E exzentrisch gegenüber den beiden Bohrungen 4, 5 angeordnet ist. Der Durchmesser B der Muffenkörperbohrung 10 ist kleiner als der Durchmesser A1 bzw. A2 der Bohrungen 4, 5. Die Muffenkörperbohrung 10 ist von der senkrecht verlaufenden Bohrung 7 durch deren Bodenwand 11 getrennt, die eine Dicke C hat, welche annähernd der Wanddicke D1 der Verbindungsmuffenstücke 2, 3 entspricht.

Die Bohrung 7 ist ferner durch eine zentrische Bohrung 12 elliptischen Querschnitts, wie aus Fig. 4 ersichtlich, mit der Muffenkörperbohrung 10 verbunden. Der Querschnitt dieser elliptischen Bohrung ist, bezogen auf die kleine Hauptachse A4 der Ellipse, um etwa die Wandstärke D1 der Verbindungsmuffenstücke 2, 3 kleiner als der Querschnitt der senkrecht verlaufenden Bohrung 7. Die größere Hauptachse A5 der Ellipse der Bohrung 12 verläuft rechtwinklig zu den parallelen Längsachsen 19, 20 der Verbindungsmuffenstückbohrungen 4, 5 sowie der Muffenkörperbohrung 10.

Die Durchmesser A1, A2 der Verbindungsmuffenstückbohrungen 4, 5 sowie der Durchmesser A3 der zu ihnen senkrecht verlaufenden Bohrung 7 sind gleich groß und entsprechen in etwa dem Außendurchmesser der in diese Bohrungen einzusteckenden und in ihnen zu verschweißenden Kunststoffrohre.

Der Durchmesser B der exzentrisch zu den Bohrungen 4, 5 angeordneten und diese verbindenden Muffenkörperbohrung 10 ist so bemessen, daß er etwa dem Innendurchmesser der in die Bohrungen 4, 5 einzuschweißenden Kunststoffrohre entspricht, wodurch der Durchflußquerschnitt des Rohrverbindungs-T-Stücks in Richtung der Längsachsen 19, 20 durch den Muffenkörper 6 selbst nicht verengt wird.

Durch die exzentrische Anordnung der Muffenkörperbohrung 10 in bezug auf die sich an sie beidseitig anschließenden Bohrungen 4, 5 erhält das Rohrverbindungsstück im Bereich größter Materialspannungen unter einem Innendruck bis zur zulässigen Höchstgrenze von 18 bar und bei einer Wassertemperatur von 95°C eine zusätzliche Festigkeit, die eine zu starke Verformung unter den genannten Bedingungen ausschließt und deshalb die verlangte Standfestigkeit bis 1000 Stunden gewährleistet. Das die Verformungskräfte aufnehmende zusätzliche Wandmaterial im Bereich der Durchdringung der senkrecht verlaufenden Bohrung 7 und der Längsbohrungen 4, 5, 10 verändert den Durchflußquerschnitt allenfalls geringfügig, ohne das Stückgewicht wesentlich zu erhöhen oder die äußeren Abmessungen des Rohrverbindungsstücks zu verändern. Dabei spielt eine wesentliche Rolle, daß die senkrecht verlaufende Bohrung 7 an ihrem Boden 14, der als Anschlag für das einzuschweissende Kunststoffrohr 17 dient, die Bohrung 12 aufweist, deren Querschnitt etwa um die doppelte Wandstärke D1 der Verbindungsmuffenstücke 2, 3 kleiner ist als der Querschnitt der Bohrung 7, wobei im dargestellten Fall eines elliptischen Querschnitts dieser Bohrung die Länge der kleinen Ellipsenhauptachse A4 etwa 2/3 des Durchmessers A1 bzw. A2 bzw. A3 beträgt. Die Länge der größeren Ellipsenhauptachse A5 der Verbindungsbohrung 12 ist in bezug auf den Durchmesser B der Muffenkörperbohrung 10 so gewählt, daß die Verbindungsbohrung 12 die letztgenannte Bohrung 10 bis zur Mittellinie 19 der Bohrungen 4, 5 durchdringt. Es entsteht also eine Exzentrizität E1 der Muffenkörperbohrung 10 in bezug auf die an sie angrenzzenden beiden Verbindungsmuffenstückbohrungen 4, 5, die etwa der halben Dicke D der Verbindungsmuffenstückwandung entspricht, was bedeutet, daß die Längsachse 20 der Muffenkörperbohrung 10 um den Wert D2 in Richtung auf die Außenwand 18 des Rohrverbindungs-T-Stücks und damit vom Boden 14 der Bohrung 7 weg versetzt angeordnet ist, wie insbesondere aus Fig. 3 ersichtlich ist.

Durchgeführte Versuche haben ergeben, daß das so gebaute Rohrverbindungs-T-Stück bei 95°C einen Berstdruck von 54,8 bar aufweist, während der Berstdruck bei derselben Temperatur bei einem bekannten Verbindungs-T-Stück, das also nicht die erfindungsgemäßen Merkmale aufweist, bei 34 bar liegt.

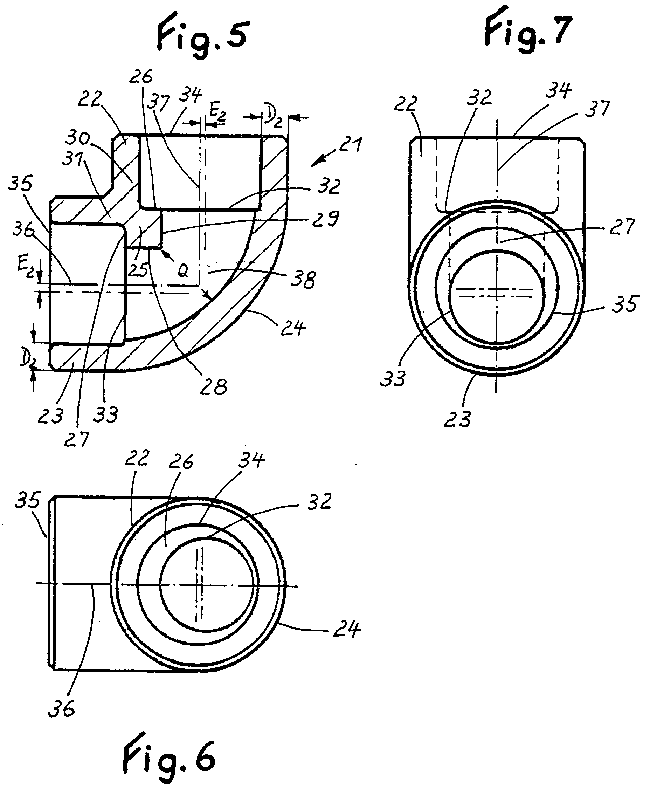

Für den Fall, daß das Rohrverbindungsstück kein T-Stück, sondern ein Winkelstück ist, beispielsweise ein 90°-Krümmer, lassen sich auf der Grundlage der obigen Erkenntnisse, betreffend eine besondere Wandverstärkung in demjenigen Bereich des Körpers, in dem die Verformungskräfte unter dem Einfluß von Druck und Temperatur so groß sind, daß sie die Wand zum Reißen bringen, entsprechende Maßnahmen ergreifen, wie sie in den Figuren 5 bis 7 dargestellt sind.

Das in Fig. 5 gezeigte Rohrverbindungsstück 21 in Form eines 90°-Winkels besteht aus Polypropylen und weist an seinen beiden Enden Verbindungsmuffenstücke 22, 23 mit Bohrungen 34, 35 auf, in die Kunststoffrohre der in Fig. 1 bei 15 und 16 gezeigten Art eingeschweißt werden. Die beiden Verbindungsmuffenstücke 22, 23 sind durch einen Rohrbogen 24 verbunden, der einen seiner Innenseite gegenüberliegenden, den Durchflußquerschnitt Q verengenden Wandvorsprung 25 aufweist, welcher durch sich axial erstreckende, aufeinander senkrecht stehende Wandteile 28, 29 begrenzt wird. Dieser Wandvorsprung bildet mit den Innenwandteilen 30, 31 der Rohrverbindungsmuffenstücke 22, 23 eine Einheit und wird zu den Verbindungsmuffenstücken hin von deren Böden 26, 27 begrenzt, an denen die einzuschweißenden Kunststoffrohre anstoßen.

Die beiden Axialbohrungen 32, 33 des Rohrbogens 24 sind in bezug auf die Mittellinien 36, 37 der beiden Axialbohrungen 34, 35 der Verbindungsmuffenstücke 22, 23 um die Strecke E2 exzentrisch angeordnet, d.h., die Durchflußbohrung 38 des Rohrbogens 24 ist zur Rohrbogenaußenwandung hin versetzt angeordnet, um Material für den Wandvorsprung 25 zu schaffen, was erforderlich ist, um die in diesem Eckbereich des winkelförmigen Rohrverbindungsstücks 21 unter Temperatur- und Druckbelastung auftretenden Materialspannungen aufzunehmen und den Winkel so zu stabilisieren, daß eine Verformung und dadurch bestehende Riß- oder Berstgefahr beseitigt wird.

Das Ausmaß der Exzentrizität E2 der Axialbohrungen 32, 34 einerseits und der Axialbohrungen 33, 35 andererseits entspricht etwa der halben Wanddicke D2 der Verbindungsmuffenstücke 22 und 23, wie aus den Fig. 6 und 7 ersichtlich. Diese Exzentrizität E2 kann damit aber auch der Wanddicke der in die Verbindungsmuffenstücke 22 und 23 einzuschweissenden Kunststoffrohre entsprechen, so daß der Durchflußquerschnitt des Rohrverbindungsstücks und damit die Durchflußmenge durch den Vorsprung 25 nicht oder nur unwesentlich beeinträchtigt werden. Das für den Vorsprung 25 benötigte zusätzliche Material bringt zudem allenfalls nur eine vernachlässigbar geringe Stückgewichtserhöhung mit sich. Die Abmessungen dieses Rohrverbindungsstücks bleiben wie bereits bei der in den Figuren 1 bis 4 beschriebenen Ausführungsform eines T-Verbindungsstücks gegenüber den bisher verwendeten Bautypen entsprechender Größe konstant.

Im Prinzip läßt sich die hier an einem 90°-Winkelstück beschriebene Festigkeitserhöhung und damit Standfestigkeits- bzw. Lebensdauerverbesserung auch an Kunststoffwinkelstücken erreichen, die einen von 90° abweichenden Winkel aufweisen. In jedem Fall wird durch eine auf der Innenseite des Winkels vorgenommene Wandverstärkung der in Fig. 5 im Längsschnitt gezeigten Art und Konfiguration die gewünschte Stabilität sichergestellt, ohne daß es hierfür eines wesentlichen fertigungstechnischen und materialmäßigen Mehraufwandes bedarf oder die Durchflußeigenschaften solcher Winkel sich gegenüber denjenigen herkömmlicher Konstruktionen verschlechtern.

## Patentansprüche

1. Rohrverbindungs-T-Stück aus Kunststoff für den Sanitär- und Heizungsbereich mit zwei in bezug aufeinander fluchtend angeordneten, eine Durchflußbohrung bildenden Verbindungsmuffenstücken, in deren Bohrungen Kunststoffrohre einschweißbar sind, sowie einem zwischen den beiden Verbindungsmuffenstücken und mit ihnen ein einheitliches Ganzes bildenden Muffenkörper mit einer senkrecht zu den Bohrungen der Verbindungsmuffenstücke verlaufenden Bohrung zur Aufnahme eines dritten Kunststoffrohres, dadurch **gekennzeichnet,** daß der Muffenkörper (6) mit einer die beiden Bohrungen (4, 5) der Verbindungsmuffenstücke (2, 3) verbindenden Bohrung (10) versehen ist, die bezogen auf die Mittellinie (19) der beiden Bohrungen (4, 5) eine in Richtung auf die der senkrecht verlaufenden Bohrung (7) gegenüberliegende Außenwand (18) des Rohrverbindungs-T-Stücks versetzte Mittellinie (20) aufweist und einen Durchmesser B besitzt, der kleiner ist als der Durchmesser A1, A2 der Verbindungsmuffenstückbohrungen (4, 5) und die von der senkrecht verlaufenden Bohrung (7) durch deren Bodenwand (11) getrennt ist, welche eine Dicke C hat, die annähernd der Wanddicke D der Verbindungsmuffenstücke (2, 3) entspricht sowie mit der senkrecht verlaufenden Bohrung (7) durch eine Bohrung (12) verbunden ist, deren Querschnitt um etwa die Wandstärke D der Verbindungsmuffenstücke (2, 3) kleiner ist als der Querschnitt der senkrecht verlaufenden Bohrung (7).

2. Rohrverbindungs-T-Stück nach Anspruch 1, dadurch **gekennzeichnet,** daß die Verbindungsbohrung (12) zwischen der senkrecht verlaufenden Bohrung (7) und der Muffenkörperbohrung (10) einen elliptischen Querschnitt aufweist, bei dem sich die größere Hauptachse der Ellipse rechtwinkelig zu den parallelen Längsachsen (19, 20) der Verbindungsmuffenstückbohrungen (4, 5) und der Muffenkörperbohrung (10) erstreckt.

3. Rohrverbindungs-T-Stück nach Anspruch 1 oder 2, dadurch **gekennzeichnet,** daß die Durchmesser A1, A2 der Verbindungsmuffenstückbohrungen (4, 5) und der Durchmesser A3 der zu ihnen senkrecht verlaufenden Bohrung (7) gleich groß sind.

4. Rohrverbindungs-T-Stück nach einem der Ansprüche 1 bis 3, dadurch **gekennzeichnet,** daß der Durchmesser B der exzentrisch zu den Verbindungsmuffenstückbohrungen (4, 5) angeordneten und diese verbindenden Muffenkörperbohrung (10) einen Durchmesser aufweist, der etwa dem Innendurchmesser der in die Verbindungsmuffenstückbohrungen (4, 5) eingeschweißten Kunststoffrohre (15, 16) entspricht.

5. Rohrverbindungs-T-Stück nach einem der Ansprüche 1 bis 4, dadurch **gekennzeichnet,** daß der kleinste Durchmesser A4 der Verbindungsbohrung (12), der im Falle eines elliptischen Querschnitts dieser Bohrung mit der Länge der kleinen Ellipsenhauptachse zusammenfällt und sich parallel zu den Bohrungslängsachsen (19, 20) erstreckt, etwa 2/3 der Durchmesser A1, A2 und A3 beträgt.

6. Rohrverbindungs-T-Stück nach einem der Ansprüche 1 bis 5, dadurch **gekennzeichnet,** daß die Verbindungsbohrung (12) zentrisch zur Längsachse (21) der senkrecht zu den Verbindungsmuffenstückbohrungen (4, 5) verlaufenden Bohrung (7) angeordnet ist.

7. Rohrverbindungs-T-Stück nach einem der Ansprüche 1 bis 6, dadurch **gekennzeichnet,** daß der größte Durchmesser A5 der Verbindungsbohrung (12) in bezug auf den Durchmesser B der Muffenkörperbohrung (10) so gewählt ist, daß die Verbindungsbohrung (12) die Muffenkörperbohrung (10) bis zur Mittellinie (19) der Verbindungsmuffenstückbohrungen (4, 5) durchdringt.

8. Rohrverbindungs-T-Stück nach einem der Ansprüche 1 bis 7, dadurch **gekennzeichnet,** daß die Exzentrizität E der Muffenkörperbohrung (10) in bezug auf die an sie angrenzenden beiden Verbindungsmuffenstückbohrungen (4, 5) etwa der Dicke D1 der Verbindungsmuffenstückwandung entspricht.

9. Rohrverbindungs-T-Stück nach einem der Ansprüche 1 bis 8, dadurch **gekennzeichnet,** daß der Kunststoff Polypropylen ist.

10. Rohrverbindungsstück aus Kunststoff für den Sanitär- und Heizungsbereich in Form eines Winkels mit zwei endseitigen Verbindungsmuffenstücken, in deren Bohrungen Kunststoffrohre einschweißbar sind, dadurch **gekennzeichnet,** daß der die beiden Verbindungsmuffenstücke (22, 23) verbindende Rohrbogen (24) einen seiner Innenseite gegenüberliegenden, den Durchflußquerschnitt Q verengenden Wandvorsprung (25) aufweist, der durch sich axial erstreckende, aufeinander senkrecht stehende Wandteile (28, 29) begrenzt wird und mit den Innenwandteilen (30, 31) der Rohrverbindungsmuffenstücke (22, 23) eine Einheit bildet, wobei der Vorsprung (25) zu den Verbindungsmuffenstücken hin von deren Boden (26, 27) begrenzt ist, bis zu dem die einzuschweißenden Kunststoffrohre einsteckbar sind.

11. Rohrverbindungsstück nach Anspruch 10, dadurch **gekennzeichnet,** daß die beiden Axialbohrungen (32, 33) des Rohrbogens (24) in bezug auf die Mittellinien (36, 37) der beiden Axialbohrungen (34, 35) der Rohrverbindungsmuffenstücke (22, 23) exzentrisch angeordnet sind.

12. Rohrverbindungsstück nach Anspruch 11, dadurch **gekennzeichnet,** daß die Exzentrizität E2 der Axialbohrungen (32, 34; 33, 35) jedes der beiden Schenkel des winkligen Rohrverbindungsstückes (21) etwa der Wanddicke D2 seiner Wandung entspricht.

13. Rohrverbindungsstück nach Anspruch 11, dadurch **gekennzeichnet,** daß die Exzentrizität E2 der Axialbohrungen (32, 34; 33, 35) jedes der beiden Schenkel des winkligen Rohrverbindungsstückes (21) etwa der Wanddicke der in die Rohrverbindungsmuffenstücke (22, 23) einzuschweißenden Kunststoffrohre entspricht.

14. Rohrverbindungsstück nach einem der Ansprüche 10 bis 13, dadurch **gekennzeichnet,** daß der Kunststoff Polypropylen ist.

15. Rohrverbindungsstück nach einem der Ansprüche 10 bis 14, dadurch **gekennzeichnet,** daß es ein 90°-Winkelstück ist.

16. Rohrverbindungsstück nach einem der Ansprüche 10 bis 14, dadurch **gekennzeichnet,** daß es ein 45°-Winkelstück ist.
